# EUROPÄISCHE PATENTSCHRIFT

(11) **EP 1 129 764 B1**
(45) Veröffentlichungstag und Bekanntmachung des Hinweises auf die Patenterteilung: **26.10.2005**
(21) Anmeldenummer: 00104212.6
(22) Anmeldetag: 01.03.2000
(51) Int. Cl.: B01D 53/94, B01J 23/40

(54) **Katalysator für die Reinigung der Abgase von Dieselmotoren und Verfahren zu seiner Herstellung**
Catalyst for purifying diesel engines exhaust gases and process for its preparation
Catalyseur pour la purification de gaz d'échappement d'un moteur diesel et procédé pour sa préparation

(43) Veröffentlichungstag der Anmeldung: 05.09.2001
(73) Patentinhaber: Umicore AG & Co. KG, 63457 Hanau-Wolfgang (DE)
(72) Erfinder: Domesle, Dr. Rainer, 63755 Alzenau-Kälberau (DE); Klein, Dr. Harald, 63856 Bessenbach (DE); Kreuzer, Dr. Thomas, 61184 Karben (DE); Lox, Dr. Egbert, 63403 Hanau (DE)
(74) Vertreter: Stellbrink, Axel

(56) Entgegenhaltungen:
- EP-A- 0 352 398
- EP-A- 0 714 692
- EP-A- 0 920 913
- EP-A- 0 923 981
- US-A- 5 855 854

## Beschreibung

Die vorliegende Erfindung betrifft einen Katalysator für die Reinigung der Abgase von Dieselmotoren, welcher wenigstens einen Zeolithen sowie zusätzlich wenigstens eines der Trägeroxide Aluminiumoxid, Siliciumdioxid, Titandioxid und Aluminiumsilicat und wenigstens eines der Edelmetalle Platin, Palladium, Rhodium, Iridium, Gold und Silber enthält.

Das Abgas von Dieselmotoren weist Kohlenmonoxid (CO), unverbrannte Kohlenwasserstoffe (HC), Stickoxide (NOₓ), Schwefeldioxid (SO₂) und Rußpartikel als Luftschadstoffe auf. Die unverbrannten Kohlenwasserstoffe umfassen Paraffine, Olefine, Aldehyde und Aromaten. Im Vergleich zu den Abgasen von Benzinmotoren weisen Dieselabgase einen wesentlich höheren Anteil an schwer oxidierbaren, langkettigen Paraffinen auf, die zu einem großen Teil auf den Rußpartikeln als sogenannte VOFs (VOF = volatile organic fraction) kondensiert sind und damit die Partikelfracht des Abgases erhöhen. Das im Abgas enthaltene Schwefeldioxid entstammt dem Schwefelgehalt des Dieselkranstoffes. Durch Oxidation zu Schwefeltrioxid können sich Sulfate bilden, die sich ebenfalls an den Rußpartikeln anlagern und die Masse der Partikel vergrößern.

Darüber hinaus sind Dieselabgase überstöchiometrisch zusammengesetzt, das heißt ihr Sauerstoffgehalt ist höher, als für die vollständige Verbrennung aller brennbaren Bestandteile des Abgases nötig wäre. Gewöhnlich liegt die Sauerstoffkonzentration im Dieselabgas zwischen 3 und 10 Vol.-%, während sie bei stöchiometrisch zusammengesetzten Abgasen von Benzinmotoren nur etwa 0,7 Vol.-% beträgt.

Die hohe Sauerstoffkonzentration von Dieselabgasen beruht auf der Tatsache, dass Dieselmotoren mit einem großen Luft/Kraftstoff-Verhältnis (kg Luft/kg Kraftstoff) von über 18 betrieben werden. Stöchiometrisch betriebene Benzinmotoren arbeiten dagegen mit einem Luft/Kraftstoff-Verhältnis von 14,6, welches eine stöchiometrische Verbrennung der Kohlenwasserstoffe ermöglicht.

Eine weitere Besonderheit der Dieselabgase ist ihre wesentlich geringere Temperatur verglichen mit der Temperatur von Benzinmotoren. Im Teillastbetrieb liegt die Abgastemperatur von modernen Dieselmotoren im Bereich zwischen 120 und 250°C und erreicht nur im Vollastbetrieb eine Maximaltemperatur zwischen 550 und 650°C.

Die tatsächliche Zusammensetzung des Abgases eines Dieselmotors hängt von dem Typ des betrachteten Motors ab. Darüber hinaus hat die Entwicklung der Dieselmotoren in den letzten 15 Jahren zu einer ständigen Veränderung der Zusammensetzung des Dieselabgases geführt. Wesentliche Entwicklungsschritte waren hier die Einführung der Abgasrückführung (AGR) und die ständige Weiterentwicklung der Kraftstoff-Einspritzsysteme wie "Pumpe-Düse" und "Common-Rail". Diese Entwicklungen haben dazu geführt, dass die gegenüber Benzinmotoren schon geringen Stickoxidemissionen von Dieselmotoren noch weiter verringert werden konnten und dass sich die Abgastemperaturen ständig weiter erniedrigten. Moderne Dieselmotoren für Personenkraftwagen weisen in den überwiegenden Betriebszuständen Stickoxidemissionen von weniger als 100 vol.-ppm auf.

Die geschilderten Besonderheiten der Dieselabgase machten die Einführung spezieller Abgasreinigungssysteme für Dieselmotoren notwendig. Die Erfolge in der Motorenentwicklung sowie die ständig weiter verschärften gesetzlichen Vorgaben bezüglich der noch zulässigen Emissionen erfordern eine ständige Weiterentwicklung der bestehenden Abgasreinigungssysteme für Dieselmotoren.

Neben der Verminderung der Partikelemission von Dieselmotoren durch die Einführung geeigneter Rußfilter ging es anfänglich im Wesentlichen darum, die Emissionen an Kohlenwasserstoffen durch die Einführung geeigneter Oxidationskatalysatoren zu vermindern. Da vor etwa 10 Jahren die Stickoxidemissionen von Dieselmotoren noch deutlich höher lagen als heute, ging es bei der Entwicklung dieser Oxidationskatalysatoren auch darum, die Weiteroxidation von im Abgas enthaltenem Stickstoffmonoxid zu Stickstoffdioxid und die Weiteroxidation von Schwefeldioxid zu Schwefeltrioxid zu unterdrücken.

Diesel-Oxidationskatalysatoren mit verminderter Neigung zur Oxidation von Stickstoffmonoxid und Schwefeldioxid werden zum Beispiel in den Patentschriften DE 39 40 758 C2, DE 42 13 018 C1 und US 5,911,961 beschrieben.

Ein weiterer Entwicklungsschritt bestand in der Entwicklung von sogenannten "Lean-NOₓ"-Katalysatoren. Solche Katalysatoren sind in der Lage, Stickoxide auch in sauerstoffieichen Abgasen zu reduzieren. Als Reduktionsmittel dienen hier die im Dieselabgas noch vorhandenen, unverbrannten Kohlenwasserstoffe. Reicht der Gehalt des Abgases an diesen Kohlenwasserstoffen für die Reduktion der Stickoxide nicht aus, so kann er durch geeignete Maßnahmen bei der Motorsteuerung oder durch eine separate Einspritzung von Dieselkraftstoff entsprechend erhöht werden. Dies führt natürlich auch zu einem höheren Kraftstoffverbrauch.

Lean-NOₓ-Katalysatoren werden in der DE 196 14 540 A1, in der EP 0 427 970 A2, in der EP 0 920 913 A1 und in der US-PS 5,897,846 beschrieben.

Weiterhin sind Katalysatoren bekannt geworden, die durch Speicherung der Kohlenwasserstoffe bei tiefen Abgastemperaturen und deren Freigabe bei höheren Abgastemperaturen die Umsetzung der Kohlenwasserstoffe und auch von Stickoxiden verbessern sollen. Solche Katalysatoren werden in der US 5,849,255, in der WO 94/22564 sowie in der WO 96/39244 beschrieben.

Bei den zuerst genannten Oxidationskatalysatoren wird die verminderte Neigung zur Oxidation von Stickstoffmonoxid und Schwefeldioxid durch Zusätze von Wolfram, Antimon, Molybdän, Nickel, Vanadium, Mangan und anderen erreicht. Bevorzugt wird Vanadium eingesetzt. So besteht die Aktivkomponente des Katalysators gemäß der DE 39 40 758 C2 aus mit Vanadium oder mit einer oxidischen Vanadiumverbindung in Berührung stehendem Platin, Palladium, Rhodium und/oder Iridium. Die Aktivkomponente ist auf feinteiligem Aluminiumoxid, Titandioxid, Siliciumdioxid, Zeolith sowie deren Abmischungen abgeschieden. Zur Herstellung des Katalysators werden zunächst die oxidischen Trägermaterialien in Form einer Dispersionsbeschichtung auf einen inerten Tragkörper aufgebracht. Anschließend wird diese Dispersionsbeschichtung mit den Aktivkomponenten imprägniert. Werden für die Dispersionsbeschichtungen Mischungen aus den verschiedenen Trägeroxiden verwendet, so werden bei der nachträglichen Imprägnierung alle Bestandteile der Dispersionsbeschichtung gleichmäßig mit den Aktivkomponenten belegt.

Auch die DE 42 13 018 C1 beschreibt die Verwendung von Aluminiumoxid, Titandioxid, Siliciumdioxid und Zeolith als Träger für die katalytisch aktiven Komponenten, die als mit Vanadin dotierte bzw. mit einer oxidischen Vanadin-Verbindung in Berührung stehende Edelmetalle Platin, Palladium, Rhodium und/oder Iridium vorliegen.

Der Oxidationskatalysator gemäß der US-PS 5,911,961 enthält auf einem ersten Trägeroxid Platin und/oder Palladium in Verbindung mit wenigstens einem Metall aus der Gruppe Wolfram, Antimon, Molybdän, Nickel, Mangan, Eisen, Wismut und andere. Zusätzlich enthält der Katalysator weitere Oxide aus der Gruppe Aluminiumoxid, Siliciumdioxid, Titandioxid, Zirkondioxid, Aluminiumsilicat und unter anderem auch Zeolithe. Diese zusätzlichen Oxide sind nicht mit den katalytisch aktiven Komponenten belegt.

Der Lean-NOₓ-Katalysator gemäß der DE 196 14 540 A1 enthält ein oder mehrere Zeolithe sowie mindestens ein Platingruppenmetall. Der Katalysator enthält zusätzlich ein oder mehrere Trägeroxide aus der Gruppe Aluminiumsilicat, Aluminiumoxid und Titandioxid. Die katalytisch aktiven Edelmetalle dieses Katalysators sind nur auf den zusätzlichen Trägeroxiden abgeschieden.

Die EP 0 427 970 A2 beschreibt einen Lean-NOₓ-Katalysator zur Verminderung der Stickoxide in einem oxidierendem Abgas mit einem Luft/Kraftstoff-Verhältnis von 22. Der Katalysator enthält wenigstens einen Zeolithen mit einem Molverhältnis SiO₂/Al₂O₃ von größer als 10 und Porendurchmessern von 0,5 bis 1 nm. Auf den Zeolithen sind Edelmetalle abgeschieden, wobei für jedes Platingruppenmetall ein minimales Gewichtsverhältnis des Metalls zum Zeolithen nicht unterschritten werden darf, wenn auch noch nach Alterung des Katalysators gute Umsetzungsraten für Stickoxide erhalten werden sollen.

Die EP 0 920 913 A1 beschreibt ein Verfahren zur Herstellung eines weiteren Lean-NOₓ-Katalysators. Ebenso wie bei der DE 196 14 540 A1 enthält dieser Katalysator mehrere Zeolithe sowie weitere Trägeroxide und katalytisch aktive Edelmetalle, wobei durch die Herstellung sichergestellt wird, dass die Zeolithe nicht mit den katalytisch aktiven Komponenten in Berührung kommen. Dadurch soll verhindert werden, dass die Zeolithe durch die im Abgas enthaltenen Kohlenwasserstoffe verkoken.

Der Lean-NOₓ-Katalysator gemäß der US-PS 5,897,846 enthält als Trägeroxide für die katalytisch aktiven Komponenten Zeolithe. Die katalytisch aktiven Komponenten sind auf den Zeolithen auf der äußeren Oberfläche in einer Schale von maximal 500 Å Dicke angeordnet.

Die US-PS 5,849,255 beschreibt einen Oxidationskatalysator, bei dem Edelmetalle aus der Platingruppe auf zwei verschiedenen Anteilen von Trägermaterialien abgeschieden sind. Der kleinere Anteil der Trägermaterialien besteht aus Aluminiumoxid, Titandioxid und Mischungen davon, während der größere Anteil der Trägermaterialien aus Zeolithen besteht. Der hohe Anteil des Katalysator an Zeolithen wird benötigt, um die im Abgas enthaltenen Kohlenwasserstoffe bei tiefen Abgastemperaturen zu speichern und sie bei höheren Abgastemperaturen wieder freizugeben und der Oxidation durch die Edelmetalle zuzuführen.

Die WO 94/22564 beansprucht einen Oxidationskatalysator für die Behandlung von Dieselabgasen, welcher Ceroxid, Zeolithe und optional Aluminiumoxid enthält. Gegebenenfalls enthält der Katalysator noch Platin. Dieser Oxidationskatalysator oxidiert die im Dieselabgas enthaltenen Kohlenwasserstoffe und Kohlenmonoxid und die VOFs. In den Poren der Zeolithe werden die Kohlenwasserstoffe während der Kaltstartphase oder anderen Phasen, während derer der Katalysator relativ kalt ist, zurückgehalten, bis sie während Perioden relativ hoher Temperatur wirkungsvoll durch den Katalysator freigesetzt und oxidiert werden können.

Die WO 96/39244 beschreibt einen Katalysator für die Verminderung der Stickoxidemissionen eines Dieselmotors, welcher ein Adsorptionsmittel für Kohlenwasserstoffe und einen Lean-NOₓ-Katalysator enthält. Als Adsorptionsmittel können Zeolithe verwendet werden. Das Adsorptionsmittel adsorbiert unverbrannte Kohlenwasserstoffe während kälterer Phasen des Betriebszyklusses und gibt sie während heißerer Phasen des Betriebszyklusses wieder frei, so dass mit ihrer Hilfe die im Abgas enthaltenen Stickoxide reduziert werden können.

Die DE 197 53 738 A1 offenbart ein Verfahren zur Herstellung eines Oxidationskatalysators für die Behandlung von Dieselabgasen, der ein Aluminiumsilicat und einen Zeolithen enthält, auf denen Platin in hochdisperser Verteilung abgeschieden sind. Durch geeignete Führung der Imprägnierung eines Pulvergemisches aus Aluminiumsilicat und Zeolith wird gewährleistet, daß sich die Platinkristallite fast ausschließlich auf dem Aluminiumsilicat ablagern.

Aufgabe der vorliegenden Erfindung ist es, einen verbesserten Oxidationskatalysator für die Reinigung der Abgase von modernen Dieselmotoren von Personenkraftwagen zur Verfügung zu stellen, deren Abgase zum Beispiel infolge einer Abgasrückführung nur geringe Stickoxidemissionen aufweisen und die wegen des Einsatzes von schwefelarmen Kraftstoffen nur wenig Schwefeldioxid enthalten. Der Katalysator soll insbesondere schon bei Temperaturen zwischen 120 und 170°C eine hohe Oxidationsaktivität für Kohlenmonoxid und Kohlenwasserstoffe zeigen und eine hohe Alterungsbeständigkeit dieser Oxidationsaktivität aufweisen.

Diese Aufgabe wird gelöst durch einen Katalysator für die Reinigung der Abgase von Dieselmotoren, welcher wenigstens einen Zeolithen sowie zusätzlich wenigstens eines der Trägeroxide Aluminiumoxid, Siliciumdioxid, Titandioxid, Zirkondioxid und Aluminiumsilicat sowie deren Mischoxide und wenigstens eines der Edelmetalle Platin, Palladium, Rhodium, Iridium, Gold und Silber enthält. Der Katalysator ist dadurch gekennzeichnet, dass die Atome der Edelmetalle eine mittlere Oxidationsstufe von weniger als +2,5 aufweisen, im Mittel mehr als 3 Metall-Liganden und weniger als 3 Sauerstoff-Liganden besitzen und auf den Zeolithen und Trägeroxiden in Form von Kristalliten mit einer mittleren Partikelgröße zwischen 1 und 6 nm vorliegen.

Im Rahmen dieser Erfindung wird zwischen Zeolithen auf der einen Seite und Trägeroxiden wie Aluminiumoxid, Siliciumdioxid, Titandioxid, Zirkondioxid und Aluminiumsilicat sowie deren Mischoxide auf der anderen Seite unterschieden, obwohl auch die Zeolithe als Trägermaterial für katalytisch aktive Komponenten dienen können. Insbesondere wird im Rahmen dieser Erfindung zwischen Aluminiumsilicaten und Zeolithen unterschieden. Zeolithe sind Aluminiumsilicate mit einer speziellen Kristallstruktur, welche eine ausgeprägte Porenstruktur aufweist. Die Kristallstruktur der im Rahmen dieser Erfindung als Aluminiumsilicate bezeichneten Trägeroxide ähnelt dagegen bei niedrigen Siliciumdioxid-Gehalten der Struktur der Aluminiumoxide und wird mit zunehmender Konzentration von Siliciumdioxid amorph. Die Kristallstruktur dieser Aluminiumsilicate weicht daher von der Struktur der Zeolithe, auch bei formal gleicher Zusammensetzung, deutlich ab.

Trägeroxide und Zeolithe wirken im Katalysator als Trägermaterialien für die Edelmetalle. Um eine möglichst hochdisperse Abscheidung der Edelmetalle auf den Trägermaterialien zu ermöglichen, werden Trägermaterialien mit einer hohen spezifischen Oberfläche (BET-Oberfläche; bestimmt durch Auswertung von Stickstoffadsorptionsisothermen nach DIN 66132) von mehr als 5 m²/g bevorzugt.

Der erfindungsgemäße Katalysator weist besonders niedrige Anspringtemperaturen für Kohlenmonoxid und Kohlenwasserstoffe auf. Dies wird durch die Kombination der Trägeroxide Aluminiumoxid, Siliciumdioxid, Titandioxid, Zirkondioxid und Aluminiumsilicat sowie deren Mischoxide mit ein oder mehreren Zeolithen sowie durch eine hohe Dispersion und einen sehr metallähnlichen Zustand der auf diesen Materialien abgeschiedenen Kristallite der Edelmetalle erreicht. Beide Materialgruppen, sowohl die Trägeroxide als auch die Zeolithe, dienen also im erfindungsgemäßen Katalysator als Trägermaterialien für die katalytisch aktiven Edelmetalle. "Metallähnlich" heißt im Rahmen dieser Patentanmeldung, daß die Metallatome in den Kristalliten eine mittlere Oxidationszahl von weniger als +2,5 und im Mittel mehr als 3 Metall-Liganden und weniger als 3 Sauerstoff-Liganden besitzen.

Es hat sich gezeigt, dass eine hohe katalytische Aktivität dann erzielt werden kann, wenn die Kristallite der Edelmetalle mittlere Partikeldurchmesser von weniger als 6 nm aufweisen und gleichzeitig im oben beschriebenen Sinne metallähnlich sind. Es handelt sich hierbei um zwei zueinander widerstrebende Forderungen, die nur unter Einhaltung bestimmter Maßnahmen bei der Fertigung gleichzeitig erfüllt werden können. Wie diese Forderungen dennoch gleichzeitig erfüllt werden können, wird weiter unten beschrieben. Trotz dieser Maßnahmen kann aber bei Metallkristalliten unter 1 nm mittleren Durchmessers eine zunehmende Oxidation nicht verhindert werden. Bei Ihnen läßt sich die Oxidationszahl von weniger als +2,5 daher nicht mit der notwendigen Sicherheit einhalten.

Partikelgröße, Oxidationszahl, Zahl der Metall- und Sauerstoff-Liganden können durch geeignete Analyseverfahren am frischen Katalysator ermittelt werden. Für die Bestimmung der mittleren Partikelgrößen der Metallkristallite eignet sich die Untersuchung im Transmissionselektronenmikroskop. Hierzu wird das Katalysatormaterial in einer geeigneten Masse eingebettet. Von einem Dünnschliff (Dicke circa 100 nm) des eingebetteten Materials wird dann im Transmissionselektronenmikroskop eine fotografische Aufnahme angefertigt und die Partikelgrößenverteilung der Platinkristallite durch Auswertung von bis zu 2000 Platinkristalliten bestimmt.

Die mittlere Oxidationszahl und die mittlere Anzahl der Metall- und Sauerstoff-Liganden lassen sich mit Hilfe der Röntgenabsorptionsspektroskopie ermitteln. Insbesondere wird die Oxidationszahl durch XANES (X-Ray Absorption Near Edge Structure) bestimmt und die Zahl der Metall- und Sauerstoff-Liganden durch EXAFS (Extended Absorption Fine Structure). Die Röntgenabsorptionspektroskopie wird an zu Tabletten verpressten Pulverproben von 0,1 mm Dicke und bei einem Messfleckdurchmesser von 1 mm vorgenommen, so dass sie eine sichere, integrale Aussage über die mittlere Oxidationszahl und mittlere Zahl der Metall- und Sauerstoffliganden der Platinkristallite über das Meßvolumen liefert.

Den mit den Edelmetallen beschichteten Zeolithen kommt eine besondere Bedeutung für die Erzielung einer möglichst niedrigen Anspringtemperatur für die Kohlenwasserstoffe des Dieselabgases zu. Zeolithe weisen aufgrund ihrer sauren Oberflächeneigenschaften eine hohe Spaltungsaktivität (Crackaktivität) für die langkettigen Kohlenwasserstoffe des Abgases auf. Die langkettigen Moleküle werden also durch Kontakt mit den Zeolithen in kleinere Bruchstücke zerlegt, die dann leichter durch die auf den Zeolithen abgelagerten Edelmetalle oxidiert werden können.

Der erfindungsgemäße Katalysator nutzt also nicht die Speicherwirkung der Zeolithe für Kohlenwasserstoffe aus, wie es zum Beispiel die US-PS 5,849,255 tut, sondern setzt ihre katalytischen Eigenschaften ein, um die Anspringtemperatur für die Oxidation der Kohlenwasserstoffe möglichst herabzusetzen. Wegen der niedrigen Anspringtemperatur kommt es zu keiner wesentlichen Speicherung der Kohlenwasserstoffe auf den Zeolithen. Der Anteil der Zeolithe am Katalysator bemißt sich daher nicht nach der benötigten Speicherkapazität für Kohlenwasserstoffe sondern nur nach ihrer promotierenden Wirkung, die sie auf die Oxidationsaktivität der katalytisch aktiven Edelmetalle ausüben. Dieser Anteil kann, wie sich gezeigt hat, wesentlich niedriger gehalten werden als es gemäß der US-PS 5,849,255 der Fall ist.

Für den erfindungsgemäßen Katalysator sind daher Gewichtsverhältnisse zwischen den Trägeroxiden und den Zeolithen zwischen 10:1 und 2:1 völlig ausreichend, bevorzugt werden Gewichtsverhältnisse von 8:1 bis 3:1, und insbesondere von 8:1 bis 4:1 eingesetzt. Mit einem Gewichtsverhältnis von 6:1 wurden besonders günstige und alterungsbeständige Oxidationsaktivitäten für Kohlenmonoxid und Kohlenwasserstoffe erzielt. Ein höherer Anteil der Zeolithe an der katalytisch aktiven Beschichtung als es einem Gewichtsverhältnis von 2:1 entspricht wirkt sich zunehmend nachteilig auf die katalytische Aktivität aus. Der Grund hierfür ist die Diffusionshemmung durch die relativ kleinen Poren der Zeolithe, die sich insbesondere bei hohen Raumgeschwindigkeiten negativ auswirkt. Dieser Effekt wird durch einen relativ großen Gehalt des Katalysators an den genannten Trägeroxiden gemildert, die in der Regel wesentlich größere Poren aufweisen als die Zeolithe und somit für eine schnelle Diffusion der Reaktanden zu den katalytisch aktiven Metallkristalliten sorgen.

Zur Erzielung einer möglichst hohen Oxidationsaktivität für die Kohlenwasserstoffe ist eine Konzentration der Edelmetalle auf den Zeolithen ausreichend, die nur 1 bis 50% der Konzentration der Edelmetalle auf den Trägeroxiden beträgt. Unter Berücksichtigung des Gewichtsverhältnisses von Trägeroxiden zu Zeolithen ergibt sich somit im Katalysator ein Massenverhältnis der auf den Zeolithen abgeschiedenen Edelmetalle zu den auf den Trägeroxiden abgeschiedenen Edelmetalle zwischen 1:100 und 1:10. Die Konzentration der Edelmetalle, bezogen auf das Gesamtgewicht, des Katalysators liegt bevorzugt zwischen 0,05 und 10 Gew.-%.

Die Trägeroxide Aluminiumoxid, Siliciumdioxid, Titandioxid, Zirkondioxid und Aluminiumsilicat weisen spezifische Oberflächen von mehr als 5, bevorzugt von mehr als 50, und insbesondere von mehr als 100 m²/g auf. Sie können einzeln oder in Mischung eingesetzt werden. Geeignet sind auch binäre oder ternäre Mischoxide aus den genannten Trägeroxiden, insbesondere ein Aluminium/Silicium/Titan-Mischoxid. Zur Stabilisierung ihrer spezifischen Oberfläche gegenüber hohen Temperaturen können diese Oxide noch in bekannter Weise mit geeigneten Stabilisatoren wie Lanthanoxid und/oder Bariumoxid dotiert sein. Die Konzentrationen der Stabilisierungskomponenten liegen dabei pro Komponente zwischen 0,5 und 20 Gew.-%, bezogen auf das Gesamtgewicht des stabilisierten Materials.

In einer besonders günstigen Ausführungsform des Katalysators enthält er eine Mischung aus einem Aluminiumsilicat und wenigstens einem Zeolithen. Besonders geeignet sind Aluminiumsilicate mit einem Gehalt an Siliciumdioxid zwischen 0,5 und 20, bevorzugt zwischen 1 und 10 Gew.-%, und einer spezifischen Oberfläche von mehr als 50 m²/g.

Von der großen Zahl der Zeolithe eignen sich Beta-Zeolithe, Zeolithe vom Faujasite-Typ, wie zum Beispiel Y-Zeolithe, insbesondere dealuminierte Y-Zeolithe, Mordenite und hoch siliciumdioxidhaltige Zeolithe vom Pentasil-Typ, insbesondere ZSM-5. Sie können einzeln oder als Mischung eingesetzt werden. Bevorzugt werden diese Zeolithe in ihrer sauren H⁺-Form eingesetzt. Als besonders geeignet haben sich dealuminierte Y-Zeolithe und ZSM-5 Zeolithe, jeweils mit einem Modul von mehr als 30, bevorzugt von mehr als 40, erwiesen. Das Modul eines Zeolithen bezeichnet sein Molverhältnis von Siliciumdioxid zu Aluminiumoxid. Als Edelmetall wird bevorzugt Platin verwendet.

Zur Herstellung des erfindungsgemäßen Katalysators werden die Trägermaterialien (Trägeroxide und Zeolithe) mit Vorläufersubstanzen der Edelmetalle auf der Basis aminkomplexierter Verbindungen wie zum Beispiel Ethanolaminplatin(IV)-hexahydroxid imprägniert und anschließend calciniert. Es hat sich gezeigt, dass die aminkomplexierten Verbindungen am besten für die Einhaltung der geforderten Partikelgrößen zwischen 1 und 6 nm geeignet sind. Unterstützt wird die Bildung kleiner und sehr homogen verteilter Metallkristallite durch Calcinieren des imprägnierten Pulvermaterials durch eine sogenannte Flash- oder Sprühcalcinierung. Bei der Sprühcalcinierung wird das mit den Vorläufersubstanzen imprägnierte und noch feuchte Trägermaterial in einen Strom heißer Gase mit einer Temperatur zwischen 500 und 1000°C eingeblasen und innerhalb weniger Sekunden, in der Regel innerhalb von weniger als einer Sekunde, sowohl getrocknet als auch calciniert. Durch Einsatz reduzierend beziehungsweise oxidierend wirkender Gase können die Pulvermaterialien entsprechend konditioniert werden. Die optimalen Verweilzeiten der Pulvermaterialien im heißen Gasstrom liegen zwischen 0,1 und 10 Sekunden. Die für die Sprühcalcinierung benötigten heißen Gase werden gewöhnlich durch Verbrennen eines Luft/Brennstoff-Gemisches erzeugt, wobei als Brennstoff bevorzugt Erdgas eingesetzt wird. Eine Beschreibung der Sprühcalcinierung findet sich in der DE 198 21 144 A1.

Wie gefunden wurde, gewährleistet die Sprühcalcinierung eine sehr feine Verteilung der Kristallite der Edelmetalle auf der Oberfläche der Trägermaterialien, weil während der sekundenschnellen Calcination für die Kristallite keine Zeit verbleibt, um sich zu größeren Agglomeraten zusammenlagem zu können.

Die unterschiedliche Beladung der Trägeroxide und der Zeolithe mit den Edelmetallen kann durch separate Präparation der Pulvermaterialien eingehalten werden.

Die mit den Edelmetallen katalysierten Pulvermaterialien werden zu einer bevorzugt wäßrigen Beschichtungsdispersion verarbeitet. Hierzu werden sie in Wasser dispergiert und in einer Kugelmühle auf eine einheitliche Korngröße zwischen 2 und 5 µm vermahlen und homogenisiert. Anschließend werden sie in Form einer Beschichtung auf die Innenwände der Strömungskanäle von üblichen monolithischen Wabenkörpern aufgebracht. Zur Fixierung der Beschichtung auf dem Wabenkörper wird sie getrocknet und calciniert. Die Calcinierung erfolgt bei Temperaturen zwischen 300 und 600°C für die Dauer zwischen 0,5 und 4 Stunden.

Zur Einhaltung der Forderungen bezüglich der Oxidationsstufe der Edelmetalle und der benachbarten Metallatome muß die Beschichtung des fertigen Katalysators in einem abschließenden Arbeitsgang zum Beispiel in einem Wasserstoff enthaltenden Gasstrom reduziert werden. Bevorzugt wird hierfür Formiergas (95 Vol.-% Stickstoff + 5 Vol.-% Wasserstoff) eingesetzt. Wie kombinierte Untersuchungen mit Transmissionselektronenmikroskopie (TEM) und Röntgenabsorptionsspektroskopie (XANES, EXAFS) ergeben haben, weisen die Edelmetalle der so hergestellten Katalysatoren eine durchschnittliche Oxidationsstufe von unter +2 und eine Anzahl der direkt benachbarten Edelmetallatome von etwa 4 auf. Die Anzahl der Sauerstoff-Liganden liegt etwa bei 2. Die hier angeführten Untersuchungsmethoden TEM, XANES und EXAFS sind sogenannte "Bulk-Untersuchungsmethoden" und liefern daher nur Durchschnittswerte gemittelt über den gesamten Katalysator. Die individuelle Oxidationsstufe, Ligandenzahl etc. eines Edelmetallatoms kann selbstverständlich von diesem Mittelwert abweichen. Diese Werte weisen darauf hin, dass die Edelmetall-Kristallite weitgehend reduziert sind und somit dem metallischen Zustand sehr nahe kommen. Dieser "metallähnliche Zustand" der Edelmetalle läßt sich nur unter Verwendung von Edelmetallvorläuferverbindungen erzielen, die organische Liganden, wie z.B. Ethanolamin im Falle der Verbindung Ethanolaminplatin(IV)-hexahydroxid, besitzen. Durch die Verwendung solcher Edelmetallvorläufersubstanzen mit organischen Liganden kommt es im Verlauf der unter Sauerstoffatmosphäre ablaufenden Calcinierung zu einer Autoreduktion des Platins. Platinpartikel mit Oxidationsstufen unterhalb von +2, die einer sehr hohen Aktivität entsprechen, werden hierdurch erhalten. Ein sich anschließender Reduktionsprozeß im Stickstoff-Wasserstoff-Strom führt zu einer weiteren Abnahme der Oxidationsstufe und somit zu einem noch stärkeren Überführen in den "metallähnlichen Zustand". Die Beschichtungskonzentration auf dem Wabenkörper hängt vom jeweiligen Anwendungsfall ab und liegt in der Regel zwischen 50 und 400 Gramm pro Liter des Wabenkörpers.

Der erfindungsgemäße Katalysator eignet sich hervorragend als Oxidationskatalysator für die Reinigung der Abgase eines Dieselmotors, welche durch Maßnahmen am Motor, wie zum Beispiel einer Abgasrückführung, nur eine sehr geringe Konzentration an Stickoxiden (kleiner 100 ppm) aufweist und dessen Temperatur im Betrieb im Bereich zwischen 100 und 500°C variiert.

### Untersuchungen zur Verkokung von Trägermaterialien durch Adsorption von Kohlenwasserstoffen:

Der erfindungsgemäße Katalysator wird im Abgas von Dieselmotoren mit überwiegend sehr niedrigen Abgastemperaturen eingesetzt. Er unterliegt daher der Gefahr einer Vergiftung und Verkokung durch Ablagerung von VOFs auf den Trägermaterialien. Daher wurde im folgenden die Neigung von Trägermaterialien untersucht, durch Absorption und Spaltung von Kohlenwasserstoffen zu verkoken. Untersucht wurde ein Aluminiumsilicat (im folgenden als Al₂O₃/SiO₂ bezeichnet) mit einem Gehalt an Siliciumdioxid von 5 Gew.-% und einer spezifischen Oberfläche von 153 m²/g sowie ein Y-Zeolith mit einem Modul von 60. Es wurden sowohl die reinen Pulvermaterialien als auch mit Platin katalysierte Pulver untersucht. Die mit Platin katalysierten Pulver wurden wie in Beispiel 1 beschrieben hergestellt.

Zur Bestimmung der Verkokungsneigung wurden jeweils 2 g des Pulvermaterials in eine Porzellanschale gegeben und mit 1 g eines Erdöldestillats (Gemisch aus paraffinischen, naphthenischen und aromatischen Kohlenwasserstoffen im Bereich C₁₀ bis C₁₆; Hydrosol P 180 HC der Firma Veba-Oel) getränkt und anschließend für 3 Minuten zermörsert. Das feuchte, homogenisierte Pulver wurde auf einer Aluminiumfolie verteilt und unter einer Infrarotlampe bei 150°C für 30 Minuten getrocknet. Die Spaltungsaktivität des so behandelten Pulvers wurde zunächst qualitativ, visuell bewertet. Anschließend wurde eine quantitative Bestimmung der Kohlenstoffablagerung durch Oxidieren des Kohlenstoffs mittels Sauerstoff und UV-spektroskopischem Nachweis des gebildeten Kohlendioxids vorgenommen. Die quantitative Bestimmung bestätigte die qualitative, visuelle Bewertung.

Die Ergebnisse dieser Untersuchung sind in Tabelle 1 aufgeführt. Untersucht wurde auch eine Pulvermischung (Pulver 5 in Tabelle 1) aus sechs Gewichtsanteilen von Pulver 2 und einem Gewichtsanteil von Pulver 4.

Die Ergebnisse dieser Versuchsreihe zeigen eindeutig, dass die reinen Trägermaterialien ohne Platin, insbesondere der Y-Zeolith, eine sehr hohe Spaltungsaktivität besitzen. Beim Dauerbetrieb eines Dieselmotors im Niederlastbereich ist also damit zu rechnen, daß eine große Menge der im Abgas enthaltenen Kohlenwasserstoffe auf nicht katalysierten Trägermaterialien abgelagert und gespalten werden. Die Poren der Trägeroxide und der Zeolithe werden "verklebt" und stehen für die katalytischen Prozesse nicht mehr zur Verfügung. Eine deutliche Aktivitätsverschlechterung des Katalysators ist die Folge.

Erfolgt dagegen eine Imprägnierung der Trägeroxide und der Zeolithe mit Platin, nimmt die Neigung zur Ablagerung von Kohlenwasserstoffen sehr stark ab, da die durch die Spaltung gebildeten Bruchstücke der Kohlenwasserstoffe auch schon bei relativ niedrigen Temperaturen von oberhalb 150°C an Platin nahezu vollständig zu CO₂ und H₂O oxidiert werden. Eine Ablagerung von Kohlenwasserstoffen und eine damit verbundene stetige Verschlechterung der katalytischen Aktivität wird auf diese Art und Weise verhindert. Es erfolgt somit eine kontinuierliche Verbrennung der sich ablagernden Kohlenwasserstoffe. Dadurch wird die Akkumulation von Kohlenwasserstoffen auf dem Katalysator vermieden. Eine solche Akkumulation würde bei erhöhten Abgastemperaturen zu einer plötzlichen Verbrennung dieser akkumulierten Kohlenwasserstoffe und der Freisetzung einer hohen Exothermie führen und den Katalysator thermisch schädigen.

**Tabelle 1:**

| Bestimmung der Verkokungsneigung von Trägermaterialien und Katalysatorformulierungen | | | | |
|---|---|---|---|---|
| Nr. | Pulver | Pt-Gehalt [Gew.-%] | Optische Bewertung [Farbänderung] | Kohlenstoffgehalt [Gew.-%] |
| 1 | Al₂O₃/SiO₂ | - | Weiß → braun | 0,15 |
| | | | | |
| 2 | Al₂O₃/SiO₂ | 0,95 | Grau → grau | 0,02 |
| | | | | |
| 3 | Y-Zeolith | - | Weiß → dunkelbraun | 1,78 |
| | | | | |
| 4 | Y-Zeolith, | 0,05 | Hellgrau → hellgrau | 0,03 |
| | | | | |
| 5 | Pulver 2 + Pulver 4 (6/1) | 0,82 | Hellgrau → hellgrau | 0,03 |

### Beispiel 1

Es wurde ein Katalysator aus einem Gemisch zweier mit Platin katalysierter Pulver angefertigt.

Zur Herstellung von Pulver 1 wurde 1 kg eines Aluminiumsilicats (5 Gew.-% Siliciumdioxid; spezifische Oberfläche: 153 m²/g)in einem Dragierkessel vorgelegt. Das Aluminiumsilicat besaß eine Wasseraufnahmekapazität von 800 ml/kg. Unter ständigem Umwälzen wurde das Aluminiumsilicat mit 766 ml einer wäßrigen Lösung von Ethanolaminplatin(IV)-hexahydroxid ((EA)₂Pt(OH)₆ = (HO-C₂H₄-NH₃)₂⁺Pt^{IV}(OH)₆) mit einem Volumenstrom von 56 ml/(kg·min) besprüht. Das noch rieselfähige, feuchte Pulver wurde durch Einblasen in einen durch Methanverbrennung erzeugten heißen Gasstrom bei einer Gastemperatur von 780°C und einer Verweilzeit im Gasstrom von circa einer Sekunde calciniert (Sprühcalcinierung).

Das so hergestellte Pt-Aluminiumsilicatpulver (Pulver 1) wies einen Platingehalt von 2,79 Gew.-% auf.

Zur Herstellung von Pulver 2 wurde 1 kg eines Y-Zeolithen mit einem Modul von 60 in einem Dragierkessel vorgelegt. Der Zeolith besaß eine Wasseraufnahmekapazität von 1350 ml/kg. Unter ständigem Umwälzen wurde der Y-Zeolith mit 242 ml einer wäßrigen Lösung von Ethanolaminplatin(IV)-hexahydroxid mit einem Volumenstrom von 56 ml/(kg·min) besprüht. Das noch rieselfähige, feuchte Pulver wurde wie Pulver 1 calciniert.

Das Pt-Zeolithpulver (Pulver 2) wies einen Platingehalt von 0,88 Gew.-% auf.

6 Anteile von Pulver 1 und ein Anteil von Pulver 2 wurden in Wasser dispergiert und durch Mahlen in einer Kugelmühle homogenisiert. Die Feststoffkonzentration der fertigen Beschichtungsdispersion betrug 35 Gew.-%. Der pH-Wert der Beschichtungsdispersion betrug 6,5. Ein offenzelliger Wabenkörper aus Cordierit mit einem Durchmesser von 11,83 cm, einer Länge von 7,6 cm, einer Zelldichte von 62 cm⁻² und einer Wandstärke der Strömungskanäle von 0,2 mm wurde durch Eintauchen in diese Dispersion mit 126 g Trockenmasse pro Liter Wabenkörpervolumen beschichtet. Die Beschichtung wurde bei 120°C an Luft getrocknet und bei 300°C für 4 h an Luft calciniert und abschließend in einem Strom aus Formiergas für 2 h bei 500°C reduziert.

Der fertige Katalysator enthielt pro Liter Katalysatorvolumen 3,17 g Platin.

Tabelle 2 gibt die wichtigsten Herstellbedingungen für die Katalysatoren dieses und der folgenden Beispiele wieder. Tabelle 3 enthält die Ergebnisse der physikochemischen Analysen dieser Katalysatoren mittels Transmissionselektronenmikroskopie (TEM) und Röntgenabsorptionsspektroskopie (XANES, EXAFS).

Der Katalysator von Beispiel 1 zeigte eine sehr gleichmäßige Verteilung der Platinpartikel mit Partikelgrößen zwischen 1 und 5 nm auf den Trägermaterialien. Die durchschnittliche Oxidationsstufe betrug zwei und die Anzahl der direkt benachbarten Platinatome vier. Dieses Ergebnis weist daraufhin, dass die Platinpartikel auf den Trägermaterialien weitgehend reduziert sind und somit dem metallischen Zustand ähneln.

Die Anwendungsbeispiele 1 bis 3 zeigen, dass dieser metallähnliche Zustand zu einer sehr hohen katalytischen Aktivität des Katalysators führt, die dem bisherigen Stand der Technik (Katalysatoren der Vergleichsbeispiele VB1 bis VB5) sowohl in der Frischaktivität als auch in der Dauerhaltbarkeit deutlich überlegen ist.

### Beispiel 2:

Es wurde ein zweiter Katalysator entsprechend Beispiel 1 hergestellt.

Im Unterschied zu Beispiel 1 wurde die Beladung der Pulver mit Platin annähernd halbiert. Pulver 1 (Pt-Aluminiumsilicat) wies einen Platingehalt von 1,24 Gew.-% und Pulver 2 (Pt-Y-Zeolith) wies einen Platingehalt von 0,38 Gew.-% auf.

6 Anteile von Pulver 1 und ein Anteil von Pulver 2 wurden in Wasser dispergiert und entsprechend der Vorschrift in Beispiel 1 behandelt. Die Beladung des beschichteten Wabenkörpers betrug ebenfalls 126 g Trockenmasse.

Der fertige Katalysator enthielt pro Liter Katalysatorvolumen 1,41 g Platin.

Die Ergebnisse der physikochemischen Untersuchungen entsprachen denen von Beispiel 1 und sind in Tabelle 3 aufgelistet.

### Beispiel 3:

Es wurde ein dritter Katalysator entsprechend Beispiel 1 hergestellt.

Der Wabenkörper wurde mit der Beschichtungsdispersion von Beispiel 2 beschichtet. Im Unterschied zu Beispiel 2 wurde die Beladung des Wabenkörpers jedoch auf 63 g Trockenmasse halbiert.

Der fertige Katalysator enthielt pro Liter Katalysatorvolumen 0,705 g Platin.

Die Ergebnisse der physikochemischen Untersuchungen entsprachen denen von Beispiel 1 und sind in Tabelle 3 aufgelistet.

### Vergleichsbeispiel 1:

Es wurde ein Vergleichskatalysator mit einer katalytischen Beschichtung gemäß der DE 197 53 738, Beispiel 1, hergestellt. Im Einzelnen verlief die Herstellung wie folgt:

Es wurde 1 kg einer Mischung aus Aluminiumsilicat und Y-Zeolith im Gewichtsverhältnis 6:1 in einem Dragierkessel vorgelegt. Die Mischung besaß eine Wasseraufnahmekapazität von 1020 ml/kg. Sie wurde unter ständigem Umwälzen mit 833 ml einer wäßrigen Lösung von Ethanolaminplatin(IV)-hexahydroxid mit einem Volumenstrom von 56 ml/(kg·min) besprüht. Das noch rieselfähige Pulver wurde für die Dauer von 12 Stunden bei 150°C im Ofen getrocknet und anschließend zur Fixierung des Platins für die Dauer von 4 Stunden bei 300°C in Luft calciniert. Im folgenden wird diese konventionelle Art der Calcinierung als Ofencalcinierung bezeichnet. Das so hergestellte Pulver enthielt 2,52 Gew.-% Platin, bezogen auf sein Gesamtgewicht.

Das Pulver wurde in Wasser dispergiert und durch Mahlen in einer Kugelmühle homogenisiert. Die Feststoffkonzentration der fertigen Beschichtungsdispersion betrug 35 Gew.-% bei einem pH-Wert von 6,5. Ein Wabenkörper wurde durch Eintauchen in diese Dispersion mit 126 g Trockenmasse pro Liter Wabenkörpervolumen beschichtet. Die Beschichtung wurde bei 120°C an Luft getrocknet und bei 300°C für 4 h an Luft calciniert und abschließend in einem Strom aus Formiergas für 2 h bei 500°C reduziert.

Der fertige Katalysator enthielt pro Liter Katalysatorvolumen 3,17 g Platin.

Die physikochemischen Untersuchungen des Katalysators zeigten eine gleichmäßige Verteilung der Platinpartikel mit Partikelgrößen zwischen 3 und 8 nm. Die durchschnittliche Oxidationsstufe der Platinatome betrug 2,5 und die Anzahl der direkt benachbarten Platinatome 2.

### Vergleichsbeispiel 2:

Es wurde ein weiterer Vergleichskatalysator gemäß Vergleichsbeispiel 1 hergestellt. Im Unterschied zu Vergleichsbeispiel 1 wurde auf die abschließende Reduktion des Katalysators verzichtet.

Die physikochemischen Untersuchungen des Katalysators zeigten eine gleichmäßige Verteilung der Platinpartikel mit Partikelgrößen zwischen 3 und 8 nm. Die durchschnittliche Oxidationsstufe der Platinatome betrug 3,0 und die Anzahl der direkt benachbarten Platinatome 0,5.

### Vergleichsbeispiel 3:

Es wurde ein weiterer Vergleichskatalysator analog zu Vergleichsbeispiel 1 hergestellt. Im Unterschied zu Vergleichsbeispiel 1 wurde jedoch das mit Platin imprägnierte Pulvergemisch nicht calciniert, sondern sofort zu einer wäßrigen Beschichtungsdispersion verarbeitet. Die Dispersion wies einen pH-Wert von 6,5 auf. Die Analyse der wäßrigen Phase der Beschichtungsdispersion ergab keine Anzeichen für abgelöste Platinbestandteile.

Mit dieser Dispersion wurde ein weiterer Wabenkörper beschichtet, getrocknet, calciniert und reduziert. Die Beschichtungsmengen waren mit denen von Vergleichsbeispiel 1 identisch.

Die physikochemischen Untersuchungen des Katalysators zeigten eine gleichmäßige Verteilung der Platinpartikel mit Partikelgrößen zwischen 3 und 8 nm. Die durchschnittliche Oxidationsstufe der Platinatome betrug 2,5 und die Anzahl der direkt benachbarten Platinatome 2.

### Vergleichsbeispiel 4:

Es wurde ein weiterer Vergleichskatalysator analog zu Vergleichsbeispiel 1 hergestellt. Im Unterschied zu Vergleichsbeispiel 1 wurde als Platinvorläufersubstanz Tetraaminplatin(II)nitrat eingesetzt. Die Beschichtung des Wabenkörpers und die thermische Behandlung erfolgte wie in Vergleichsbeispiel 1.

Die physikochemischen Untersuchungen des Katalysators zeigten eine inhomogene Verteilung der Platinpartikel auf den Trägermaterialien mit Partikelgrößen zwischen 5 und 20 nm. Die durchschnittliche Oxidationsstufe der Platinatome betrug 3,2. Es konnten keine direkt benachbarten Platinatome festgestellt werden.

### Vergleichsbeispiel 5:

Es wurde ein weiterer Vergleichskatalysator analog zu Vergleichsbeispiel 1 hergestellt. Im Unterschied zu Vergleichsbeispiel 1 wurde als Platinvorläufersubstanz Hexachloro(IV)platinsäure (H₂PtCl₆·6H₂O) eingesetzt. Die Beschichtung des Wabenkörpers und die thermische Behandlung erfolgte wie in Vergleichsbeispiel 1.

Die physikochemischen Untersuchungen des Katalysators zeigten eine inhomogene Verteilung der Platinpartikel auf den Trägermaterialien mit Partikelgrößen zwischen 10 und 25 nm. Die durchschnittliche Oxidationsstufe der Platinatome betrug 3,5. Es konnten keine direkt benachbarten Platinatome festgestellt werden.

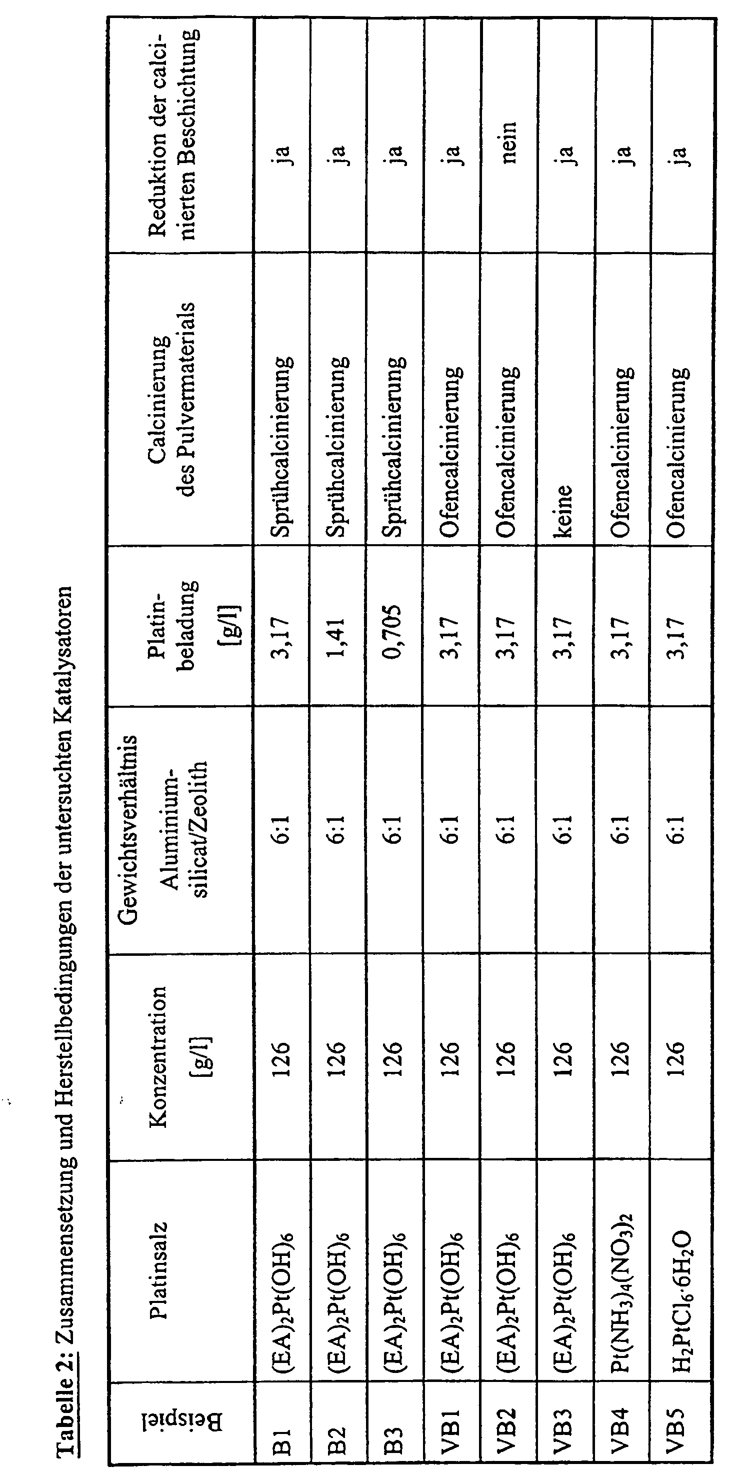

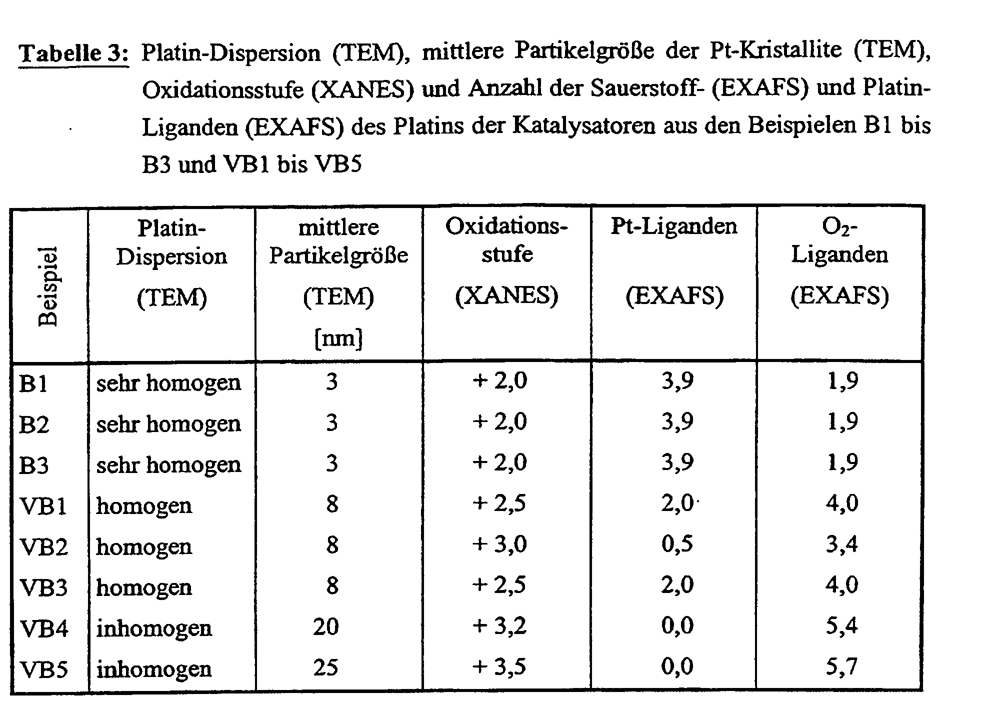

### Anwendungsbeispiel 1:

Die Dauerhaltbarkeit der Katalysatoren wurden an einem PKW mittels eines definiert ablaufenden Dauerstandstests über 40000 km überprüft. Als Fahrzeug für den Prüf- und den Dauerlaufzyklus diente ein PKW mit einem 1,9 L DI Motor und einer Leistung von 81 kW. Die Fahrzeugrollenprüfungen wurden mit einem nach Euro 2 Standard vorgeschriebenen, handelsüblichen Dieseltreibstoff mit einem Schwefelgehalt unter 500 Gew.-ppm durchgeführt.

Zur Messung der im Abgas enthaltenen Gaskomponenten wurden die in Tabelle 4 angegebenen Meßgeräte verwendet.

**Tabelle 4:**

| Zusammenstellung der Meßgeräte zur Messung der Abgaskonzentration | | |
|---|---|---|
| Analysiertes Gas | Meßgerät | Hersteller |
| O₂ | Oxymat | Siemens AG |
| HC | FID | Pierburg Meßtechnik |
| NOₓ | CLD 700 Elht | Zellweger ECO-Systeme |
| CO | Binos | Rosemount |
| CO₂ | Binos | Rosemount |
| SO₂ | Binos | Rosemount |

Die gemessenen Schadstoffemissionen der Katalysatoren im europäischen MVEG-A Prüfzyklus sind in Tabelle 5 aufgelistet.

**Tabelle 5:**

| Schadstoffemissionen der Katalysatoren B1, VB1, VB2 und VB3 nach einem Dauerlauf von 40000 km an einem PKW mit einem 1,9 l DI-Motor und 81 kW Leistung. EU3 bezeichnet die vom Jahre 2000 an gültigen Schadstoffgrenzwerte für PKW in der Europäischen Union | | | | |
|---|---|---|---|---|
| Beispiel | CO [g/km] | HC [g/km] | NOx [g/km] | Partikel [g/km] |
| EU3 | 0,65 | 0,06 | 0,5 | 0,05 |
| B1 | 0,43 | 0,04 | 0,43 | 0,02 |
| VB1 | 0,65 | 0,05 | 0,44 | 0,02 |
| VB2 | 0,75 | 0,06 | 0,44 | 0,02 |
| VB3 | 0,68 | 0,06 | 0,44 | 0,02 |

### Anwendungsbeispiel 2:

Abgaskatalysatoren von modernen Dieselmotoren werden sehr häufig einem Dauerbetrieb bei sehr niedrigen Abgastemperaturen ausgesetzt. In diesem Betriebszustand liegen die Abgastemperaturen unterhalb der normalen Arbeitstemperatur der Katalysatoren. Es kommt daher zu einer anwachsenden Ablagerung von Kohlenwasserstoffen und Ruß auf den Katalysatoren, die beim Wechsel in den Volllastbetrieb und Erreichen der Arbeitstemperatur der Katalysatoren innerhalb kurzer Zeit Abbrennen und infolge der dabei frei werdenden hohen Exothermie zu einer Schädigung der Katalysatoren führen.

Solche Verhältnisse treten immer dann auf, wenn der Fahrer nach einer sehr langen Fahrt im Niederlastbetrieb in einen höheren Lastbetrieb wechselt.

Diese Betriebszustände können durch eine sogenannte Leerlauf-Abbrand-Alterung an einem Fahrzeugrollenprüfstand simuliert werden. Zunächst wird das Fahrzeug für 8 Stunden im Leerlauf bei Abgastemperaturen um 100°C vor Katalysator betrieben. Danach wird schlagartig in den Volllastbetrieb beschleunigt. Dies führt zu einem Abbrennen der auf dem Katalysator abgelagerten Kohlenwasserstoffe und von Ruß innerhalb einer kurzen Zeit mit Temperaturspitzen bis zu 800°C und mehr. Dieser Zyklus aus Leerlauf und Volllastbetrieb kann zur forcierten Alterung des Katalysators mehrfach wiederholt werden.

Die Katalysatoren der Beispiele B1 und der Vergleichsbeispiele VB1 bis VB3 wurden zwölf Zyklen aus Leerlauf und Volllastbetrieb ausgesetzt. Die Anspringtemperaturen der Katalysatoren für den Umsatz von Kohlenmonoxid und Kohlenwasserstoffen wurden vor und nach der 96 Stunden dauernden Leerlauf-Abbrand-Alterung direkt am Motorprüfstand gemessen.

Die ermittelten Anspringtemperaturen für Kohlenmonoxid CO und Kohlenwasserstoffe sind in Tabelle 6 sowohl für den Frischzustand als auch nach Alterung zusammengefasst.

**Tabelle 6:**

| Anspringtemperaturen (T₅₀ = Temperatur, bei der 50 % Umsatz erfolgt) für CO und HC im Frischzustand und nach 96 h Leerlauf-Abbrand-Alterung der Katalysatoren B1, VB1, VB2 und VB3 | | | | |
|---|---|---|---|---|
| Beispiel | T_{50,CO} [°C] | | T_{50,HC} [°C] | |
| | frisch | gealtert | frisch | gealtert |
| B1 | 135 | 145 | 145 | 154 |
| VB1 | 138 | 163 | 146 | 164 |
| VB2 | 143 | 173 | 149 | 174 |
| VB3 | 137 | 166 | 147 | 169 |

Wie die Ergebnisse der Tabelle 6 zeigen, sind die Anspringtemperaturen für Kohlenmonoxid und Kohlenwasserstoffe beim erfindungsgemäßen Katalysator von Beispiel 1 im Frischzustand vergleichbar mit den Werten der Vergleichskatalysatoren. Nach Alterung weist er jedoch deutlich bessere Anspringtemperaturen als die Vergleichskatalysatoren auf. Dies kann darauf zurückgeführt werden, daß im erfindungsgemäßen Katalysator die emittierten Kohlenwasserstoffe schon bei sehr niedrigen Abgastemperaturen kontinuierlich verbrannt werden. Damit wird eine starke Akkumulation von Kohlenwasserstoffen auf dem Katalysator vermieden. Somit treten die gewöhnlich mit hohen Temperaturspitzen verbundenen schlagartigen Abbrände der gespeicherten Kohlenwasserstoffe im erfindungsgemäßen Katalysator nur im geringeren und wesentlich abgeschwächten Maße auf. Dadurch wird die Alterung des Katalysators verlangsamt.

### Anwendungsbeispiel 3:

In einer weiteren Prüfung wurden die Katalysatoren der Beispiele und Vergleichsbeispiele einer 16-stündigen hydrothermalen Ofenalterung bei 750°C in Luft mit 10 Vol.-% Wasserdampf und 20ppm Schwefeldioxid ausgesetzt.

Vor und nach der hydrothermalen Alterung wurden die Anspringtemperaturen der Katalysatoren für Kohlenmonoxid und Kohlenwasserstoffe an einer Synthesegasanlage gemessen. Die gewählten Prüfbedingungen und die Gaszusammensetzung sind in Tabelle 7 aufgelistet. Als Kohlenwasserstoffkomponente wurde Propen verwendet.

**Tabelle 7:**

| Gaszusammensetzung zur Bestimmung der Anspringtemperaturen für Kohlenmonoxid und Kohlenwasserstoffe (C₃H₆) | | | |
|---|---|---|---|
| Komponente | Konzentration | Komponente | Konzentration |
| CO | 350 [vppm] | O₂ | 6 [Vol.-%] |
| H₂ | 117 [vppm] | H₂O | 10 [Vol.-%] |
| C₃H₆ | 90 [ppmC₃] | CO₂ | 10,7 [Vol.-%] |
| SO₂ | 20 [vppm] | N₂ | Rest |
| NO | 270 [vppm] | | |

Für die Messung der Anspringtemperaturen wurden Katalysatorbohrkerne mit einem Durchmesser von 25 mm und einer Länge von 76 mm verwendet, die mit einer Gasmenge von 1950 Nl/h, entsprechend einer Raumgeschwindigkeit von 50000 h⁻¹, belastet wurden. Das Abgas wurde während der Messungen mit einer Rate von 15°C/min aufgeheizt.

Die Ergebnisse der Messungen sind in Tabelle 8 für die frischen und gealterten Katalysatoren aufgeführt.

**Tabelle 8:**

| Anspringtemperaturen der Katalysatoren der Beispiele B1-B3 und VB1-VB5 im Frischzustand und nach Ofenalterung (16h, 750°C, Luft +10 Vol.-% H₂O + 20 ppm SO₂) | | | | |
|---|---|---|---|---|
| Beispiel | T_{50,CO} [°C] | | T_{50,HC} [°C] | |
| | frisch | gealtert | frisch | gealtert |
| B1 | 123 | 183 | 142 | 197 |
| VB1 | 133 | 197 | 148 | 207 |
| VB2 | 142 | 207 | 157 | 215 |
| VB3 | 138 | 202 | 151 | 210 |
| VB4 | 148 | 215 | 161 | 235 |
| VB5 | 157 | 227 | 173 | 247 |
| B2 | 137 | 198 | 154 | 211 |
| B3 | 152 | 214 | 167 | 227 |

Die Katalysatoren der Beispiele B1 und VB1 bis VB5 weisen alle den selben Platingehalt von 3,17 g/l (entspricht 90 g/ft³) auf und sind somit bezüglich ihrer globalen Zusammensetzung identisch. Die Katalysatoren der Beispiele B2 und B3 besitzen dagegen nur etwa die Hälfte, beziehungsweise ein Viertel, des Edelmetallgehaltes der anderen Katalysatoren und können daher mit B1, VB1 - VB5 nicht direkt verglichen werden. B2 und B3 wurden daher am Ende der Tabelle 8 aufgeführt.

## Patentansprüche

1. Katalysator für die Reinigung der Abgase von Dieselmotoren enthaltend wenigstens einen Zeolithen sowie zusätzlich wenigstens eines der Trägeroxide Aluminiumoxid, Siliciumdioxid, Titandioxid, Zirkondioxid und Aluminiumsilicat sowie deren Mischoxide und auf den Zeolithen und Trägeroxiden wenigstens eines der Edelmetalle Platin, Palladium, Rhodium, Iridium, Gold und Silber, in Form von Kristalliten mit einer mittleren Partikelgröße zwischen 1 und 6 nm,
**dadurch gekennzeichnet,**
**dass** die Atome der Edelmetalle eine mittlere Oxidationsstufe von weniger als +2,5 aufweisen, im Mittel mehr als 3 Metall-Liganden und weniger als 3 Sauerstoff-Liganden besitzen .

2. Katalysator nach Anspruch 1,
**dadurch gekennzeichnet,**
**dass** das Gewichtsverhältnis der Trägeroxide zu den Zeolithen zwischen 10:1 bis 2:1 beträgt.

3. Katalysator nach Anspruch 2,
**dadurch gekennzeichnet,**
**dass** das Massenverhältnis der auf den Zeolithen abgeschiedenen Edelmetalle zu den auf den Trägeroxiden abgeschiedenen Edelmetalle im Katalysator zwischen 1:100 und 1:10 beträgt.

4. Katalysator nach Anspruch 1,
**dadurch gekennzeichnet,**
**dass** die Edelmetalle in einer Konzentration von 0,05 bis 10 Gew.-%, bezogen auf das Gesamtgewicht des Katalysators, vorliegen.

5. Katalysator nach Anspruch 1,
**dadurch gekennzeichnet,**
**dass** er als Trägeroxide binäre oder ternäre Mischoxide der genannten Oxide enthält.

6. Katalysator nach Anspruch 1,
**dadurch gekennzeichnet,**
**dass** die Trägeroxide mit Lanthanoxid und/oder Bariumoxid dotiert sind.

7. Katalysator nach Anspruch 1,
**dadurch gekennzeichnet,**
**dass** er einen Y-Zeolithen und/oder einen ZSM-5 Zeolithen enthält, wobei beide Zeolithe ein Modul von mehr als 40 besitzen.

8. Katalysator nach Anspruch 1,
**dadurch gekennzeichnet,**
**dass** als Platingruppenmetall Platin vorliegt.

9. Katalysator nach einem der vorstehenden Ansprüche,
**dadurch gekennzeichnet,**
**dass** er in Form einer Beschichtung auf den Innenwänden der Strömungskanäle eines monolithischen Wabenkörpers in einer Konzentration von 50 bis 400 Gramm pro Liter Volumen des Wabenkörpers aufgebracht ist.

10. Verfahren zur Herstellung eines Katalysators auf einem monolithischen Wabenkörper nach Anspruch 7,
**dadurch gekennzeichnet,**
**dass** zunächst die Trägeroxide und die Zeolithe separat mit Vorläuferverbindungen der Edelmetalle imprägniert, im noch feuchten Zustand durch Einblasen in 500 bis 1000°C heiße Verbrennungsabgase innerhalb von 0,1 bis 10 Sekunden calciniert und dann zu einer gemeinsamen Beschichtungsdispersion verarbeitet werden, mit welcher anschließend der monolithische Wabenkörper beschichtet und die Beschichtung danach getrocknet, calciniert und abschließend reduziert wird.

11. Verwendung des Katalysators nach einem der vorstehenden Ansprüche für die Reinigung der Abgase von Dieselmotoren.

## Claims

1. Catalyst for purifying the exhaust gases of diesel engines,comprising at least one zeolite and, additionally, at least one of the carrier oxides aluminium oxide, silicon dioxide, titanium dioxide, zirconium dioxide and aluminium silicate and mixed oxides thereof and on the zeolites and carrier oxides at least one of the noble metals platinum, palladium, rhodium, iridium, gold and silver in the form of crystallites having a mean particle size of from 1 to 6 nm,
**characterised in that**
the atoms of the noble metals have a mean oxidation number of less than +2.5, on average more than 3 metal ligands and less than 3 oxygen ligands.

2. Catalyst according to claim 1,
**characterised in that**
the weight ratio of the carrier oxides to the zeolites is from 10:1 to 2:1.

3. Catalyst according to claim 2,
**characterised in that**
the mass ratio of the noble metals deposited on the zeolites to the noble metals deposited on the carrier oxides in the catalyst is from 1:100 to 1:10.

4. Catalyst according to claim 1,
**characterised in that**
the noble metals are present in a concentration of from 0.05 to 10 wt.%, based on the total weight of the catalyst.

5. Catalyst according to claim 1,
**characterised in that**
it comprises as carrier oxides binary or ternary mixed oxides of the mentioned oxides.

6. Catalyst according to claim 1,
**characterised in that**
the carrier oxides are doped with lanthanum oxide and/or barium oxide.

7. Catalyst according to claim 1,
**characterised in that**
it comprises a Y-zeolite and/or a ZSM-5 zeolite, both zeolites having a modulus of more than 40.

8. Catalyst according to claim 1,
**characterised in that**
platinum is present as the platinum group metal.

9. Catalyst according to any one of the preceding claims,
**characterised in that**
it has been applied in the form of a coating to the inside walls of the flow channels of a monolithic honeycomb body in a concentration of from 50 to 400 grams per litre of volume of the honeycomb body.

10. Process for the preparation of a catalyst on a monolithic honeycomb body according to claim 7,
**characterised in that**
the carrier oxides and the zeolites are first impregnated separately with precursor compounds of the noble metals, are calcined in the still moist state in the course of from 0.1 to 10 seconds by being blown into combustion waste gases at a temperature of from 500 to 1000°C, and are then processed to a common coating dispersion with which the monolithic honeycomb body is subsequently coated, and the coating is then dried, calcined and, finally, reduced.

11. Use of the catalyst according to any one of the preceding claims in the purification of the exhaust gases of diesel engines.

## Revendications

1. Catalyseur destiné à purifier les gaz d'échappement de moteurs Diesel contenant au moins une zéolithe et en outre au moins l'un des oxydes porteurs suivants : l'oxyde d'aluminium, le bioxyde de silicium, le bioxyde de titane, le bioxyde de zirconium et le silicate d'aluminium, ainsi que des mélanges de ces oxydes et, sur les zéolithes et les oxydes porteurs, au moins l'un des métaux nobles suivants : platine, palladium, rhodium, iridium, or et argent, sous forme de cristaux ayant une dimension de particules moyenne comprise entre 1 et 6 nm,
**caractérisé en ce que**
les atomes des métaux nobles présentent un étage d'oxydation moyen inférieur à +2,5 et comportent en moyenne plus de 3 liants métalliques et moins de 3 liants d'oxygène.

2. Catalyseur selon la revendication 1,
**caractérisé en ce que**
le rapport pondéral des oxydes porteurs par rapport aux zéolithes est compris entre 10:1 et 2:1.

3. Catalyseur selon la revendication 2,
**caractérisé en ce que**
le rapport massique des métaux nobles déposés sur les zéolithes par rapport aux métaux nobles déposés sur les oxydes porteurs dans le catalyseur est compris entre 1:100 et 1:10.

4. Catalyseur selon la revendication 1,
**caractérisé en ce que**
les métaux nobles se présentent dans une concentration comprise de 0,05 à 10 % en masse, par rapport au poids total du catalyseur.

5. Catalyseur selon la revendication 1,
**caractérisé en ce qu'**
il contient, pour les oxydes porteurs, des mélanges binaires ou ternaires desdits oxydes.

6. Catalyseur selon la revendication 1,
**caractérisé en ce que**
les oxydes porteurs sont dotés d'oxyde de lanthane et/ou d'oxyde de baryum.

7. Catalyseur selon la revendication 1,
**caractérisé en ce qu'**
il contient une zéolithe Y et/ou une zéolithe ZSM-5, les deux zéolithes comportant un module de plus de 40.

8. Catalyseur selon la revendication 1,
**caractérisé en ce que**
le métal du groupe platine est du platine.

9. Catalyseur selon l'une des revendications précédentes,
**caractérisé en ce qu'**
il est appliqué sous la forme d'un revêtement sur les parois intérieures des voies d'écoulement d'un corps monolithique en nids d'abeille dans une concentration de 50 à 400 grammes par litre en volume du corps en nids d'abeille.

10. Procédé de fabrication d'un catalyseur sur un corps monolithique en nids d'abeille selon la revendication 7,
**caractérisé en ce que**
les oxydes porteurs et les zéolithes sont d'abord imprégnés de manière séparée avec des composés précurseurs des métaux nobles, puis sont calcinés, encore à l'état humide, par soufflage dans des gaz de combustion chauffés entre 500 et 1000°C pendant 0,1 à 10 secondes, et sont traités pour former une dispersion de revêtement commune qui permet ensuite de recouvrir le corps monolithique en nids d'abeille, le revêtement étant alors séché, calciné et enfin réduit.

11. Utilisation du catalyseur selon l'une des revendications précédentes pour purifier des gaz d'échappement de moteurs Diesel.
